# EUROPÄISCHE PATENTSCHRIFT

(11) **EP 3 835 621 B1**
(45) Veröffentlichungstag und Bekanntmachung des Hinweises auf die Patenterteilung: **16.08.2023**
(21) Anmeldenummer: 20212496.2
(22) Anmeldetag: 08.12.2020
(51) Int. Cl.: F16H 35/00

(54) **STELLANTRIEB**
ACTUATOR
SERVOMOTEUR

(30) Priorität: 13.12.2019 DE 102019134362
(43) Veröffentlichungstag der Anmeldung: 16.06.2021
(73) Patentinhaber: AUMA Riester GmbH & Co. KG, 79379 Müllheim (DE)
(72) Erfinder: Hofmann, Benjamin, 79423 Heitersheim (DE)
(74) Vertreter: Mertzlufft-Paufler, Cornelius

(56) Entgegenhaltungen:
- DE-A1- 3 823 718
- DE-A1-102012 022 082
- US-A- 2 438 545
- US-A- 2 443 036
- US-A- 4 877 120
- US-A- 5 139 230
- US-A1- 2007 012 367
- US-A1- 2019 368 586

## Beschreibung

Die Erfindung betrifft einen Stellantrieb mit wenigstens einer Anschlagsvorrichtung umfassend wenigstens ein Endanschlagselement für einen Teil eines Antriebsstrangs und wenigstens ein mit dem Endanschlagselement in einer Wirkverbindung stehendes Verstellelement, das zur Einstellung einer Position des Endanschlagselements eingerichtet ist.

Stellantriebe eingangs genannter Art sind bereits bekannt. Vor der ersten Inbetriebnahme eines Stellantriebes ist es regelmäßig erforderlich, das wenigstens eine Endanschlagselement der Anschlagsvorrichtung einzustellen, um die Position eines Endanschlages festzulegen.

Bei vorbekannten Stellantrieben ist das Verstellelement häufig als eine Schraube ausgebildet, deren Schraubenkopf außerhalb eines Gehäuses angeordnet ist. Das Endanschlagselement ist zumeist mit dem als Schraube ausgebildeten Verstellelement verbunden. Die Schraube wird dabei in einem in einer Gehäusewandung ausgebildeten Gewinde geführt, so dass man durch ein Heraus- oder Hineinschrauben der Schraube die Position des Endanschlages einstellen kann.

Diese Ausgestaltung der Anschlagsvorrichtung weist jedoch den Nachteil auf, dass es erforderlich ist, dass eine Seitenwand des Gehäuses, in welcher die Schraube in dem Gewinde geführt ist, zugänglich sein muss, um eine Einstellung des Endanschlages vornehmen zu können. Gerade bei beengten Platzverhältnissen ist es daher häufig schwierig, eine präzise Einstellung des Endanschlages vornehmen zu können.

Ein weiterer Nachteil vorbekannter Anschlagsvorrichtungen besteht darin, dass es bei einer Beaufschlagung des Endanschlages durch einen Teil eines Antriebsstrangs, wie beispielsweise durch einen auf einer Welle exzentrisch angeordneten Teil, zu einer von innen nach außen auf die Gehäusewand wirkenden Kraft kommt. Über das Verstellelement wird die durch die Beaufschlagung des Endanschlagselements wirkende Druckkraft somit auf die Gehäusewandung abgeleitet. Bei einer im Betrieb vorkommenden Überlastung, z.B. durch eine Fehlbedienung, kann dies jedoch zu Schäden an der Gehäusewandung, bis zu einem Brechen der Gehäusewandung an der Verbindungsstelle zwischen Gehäusewandung und dem Verstellelement führen. Da es sich bei Stellantrieben jedoch häufig um schwer zugängliche Elemente größerer Anordnungen handelt, ist allerdings ein relativ wartungsarmer Betrieb erstrebenswert. Gerade in Industrieanlagen ist es wichtig, dass Betriebsabläufe nicht durch den Ausfall eines Stellantriebes gestört werden.

Aus US 2007 012367 A1 ist ein Stellantrieb zum Verstellen eines Ventils vorbekannt, wobei ein "field adjustment module 24" zwischen das Ventil und den Stellantrieb geschalten ist, um einen Endanschlag mittels einer Einstellschraube einstellen und damit die maximale Offenposition und somit die maximale Flussrate durch das Ventil festlegen zu können. Um dieses Einstellen zu ermöglichen, sind zwei Anschlagsflächen ausgebildet und die gesamte Vorrichtung weist ein Endanschlagselement auf sowie ein mit dem Endanschlagselement in einer Wirkverbindung stehendes Verstellelement, wobei zwischen diesen beiden Teilen ein Getriebe ausgebildet ist. Dadurch kann der Stellantrieb das Ventil nur innerhalb derjenigen Grenzen verstellen, die durch die mechanischen Endanschläge vorgegeben sind.

Ausgehend von diesem vorbekannten Stand der Technik, besteht die Aufgabe, einen Stellantrieb mit gegenüber vorbekannten Stellantrieben verbesserten Gebrauchseigenschaften bereitzustellen.

Diese Aufgabe wird erfindungsgemäß durch einen Stellantrieb mit den Merkmalen nach Anspruch 1 gelöst.

Insbesondere wird erfindungsgemäß zur Lösung der Aufgabe ein Stellantrieb eingangs genannter Art vorgeschlagen, der sich dadurch auszeichnet, dass zwischen dem wenigstens einen Endanschlagselement und dem wenigstens einen Verstellelement wenigstens ein Getriebe angeordnet ist. Durch die Anordnung des wenigstens einen Getriebes ist es möglich, eine Änderung eines Eingangsdrehmoments, das durch einen Benutzer auf das Verstellelement aufgebracht wird, in ein Ausgangsdrehmoment zur Einstellung der Position des Endanschlagselements umzuwandeln. Dadurch ist es möglich, eine einfachere Einstellung der Position des Endanschlagselements vorzunehmen. Weiter lässt sich dadurch die Kraftableitung der auf das Endanschlagselement wirkenden Druckkraft verbessern, so dass Schäden an einer Gehäusewandung besser vermieden werden können.

Ferner ist erfindungsgemäß vorgesehen, dass der Stellantrieb ein erstes Verstellelement und ein zweites Verstellelement aufweist, wobei zwischen dem ersten Verstellelement und dem Endanschlagselement ein erstes Getriebe und zwischen dem ersten Verstellelement und dem zweiten Verstellelement ein zweites Getriebe angeordnet ist. Somit ist eine besonders genaue und bequeme Einstellung der Position des Endanschlagselements möglich, wobei der Platzbedarf bei dieser Ausgestaltung des Stellantriebes sogar geringer als bei vorbekannten Stellantrieben ausfällt. Durch die Getriebe ist es möglich, jeweils eine Änderung des Drehmoments zu erreichen, so dass eine Rotationsbewegung am zweiten Verstellelement in eine Verstellbewegung des Endanschlagselements umgesetzt wird. Insbesondere ist dadurch eine besonders genaue Einstellung der Position des Endanschlagselements möglich.

Nachfolgend werden vorteilhafte Ausgestaltungen der Erfindung beschrieben, die allein oder in Kombination mit den Merkmalen anderer Ausgestaltungen optional zusammen mit den Merkmalen nach Anspruch 1 kombiniert werden können.

Gemäß einer vorteilhaften Ausgestaltung kann das Endanschlagselement mit einem Umwandlungselement des wenigstens einen Getriebes in einer Wirkverbindung stehen. Insbesondere kann das Endanschlagselement mit dem Umwandlungselement verbunden sein. Das Endanschlagselement kann relativ zu dem Umwandlungselement des wenigstens einen Getriebes beweglich, insbesondere um eine Schwenkachse drehbar, angeordnet sein. Somit ist es möglich, die Position des Endanschlagselements durch eine Betätigung des wenigstens einen Verstellelements einzustellen, indem eine Kraft- und/oder Drehmomentübertragung vom Verstellelement auf das Umwandlungselement und vom Umwandlungselement auf das Endanschlagselement möglich ist. Zudem kann dadurch erreicht werden, dass sich das Verstellelement bezogen auf seine Längsachse axial nicht oder nur geringfügig gegenüber dem Gehäuseteil verstellt, wenn es betätigt wird. Somit ist der Platzbedarf des Stellantriebes geringer als bei vorbekannten Stellantrieben, da das Verstellelement stets nahezu gleichbleibend weit aus dem Gehäuseteil herausragt.

Gemäß einer weiteren vorteilhaften Ausgestaltung kann das wenigstens eine Verstellelement mit einem Gehäuseteil, insbesondere einem Innengehäuseteil, des Stellantriebs verbunden sein, wobei bei einer Druck-Beaufschlagung des Endanschlagselements durch einen Teil des Antriebsstrangs eine Kontaktstelle des Gehäuseteils mit dem wenigstens einen Verstellelement auf Zug belastet ist. Insbesondere ist die Kontaktstelle des Gehäuseteils mit einem nach innen gerichteten Zug belastet. Somit ist verglichen mit Stellantrieben, bei welchen die Kontaktstelle mit einem nach außen gerichteten Druck belastet ist, eine bessere Kraftableitung über das Gehäuseteil möglich. Vorzugsweise kann somit vorgesehen sein, dass bei einer Beaufschlagung des Endanschlagselements durch einen Teil des Antriebsstrangs eine Belastung der Kontaktstelle größtenteils durch eine Zugkraft und/oder größtenteils nicht durch eine Druckkraft besteht.

Insbesondere kann die Kontaktstelle am Gehäuseteil gewindefrei ausgebildet sein. Somit ist die Anschlagsvorrichtung robuster ausgestaltet als bei Stellantrieben, deren Anschlagsvorrichtung ein Gewinde an der Kontaktstelle am Gehäuseteil benötigt.

Gemäß einer weiteren vorteilhaften Ausgestaltung kann es vorgesehen sein, dass das Verstellelement einen Verstellkopf aufweist, der drehbar an dem Gehäuseteil, insbesondere an einer oder der vorzugsweise gewindefreien Kontaktstelle, gelagert ist. Insbesondere kann der Verstellkopf eine Werkzeugangriffsstelle und/oder ein Getrieberad aufweisen.

Alternativ oder ergänzend dazu, kann gemäß einer weiteren vorteilhaften Ausgestaltung vorgesehen sein, dass ein Abstand zwischen dem Verstellelement und dem Gehäuseteil, insbesondere ein Abstand zwischen dem Verstellkopf und dem Gehäuseteil, bei einer Betätigung des Verstellelements, insbesondere bei einer Rotation des Verstellelements, konstant bleibt. Wie bereits zuvor erläutert, kann dadurch der Gesamtplatzbedarf des Stellantriebes gegenüber vorbekannten Stellantrieben deutlich reduziert werden.

Gemäß einer weiteren vorteilhaften Ausgestaltung kann das wenigstens eine Verstellelement ein Gewinde aufweisen, das in ein entsprechendes Gegengewinde an einem Umwandlungselement, beispielsweise dem bereits zuvor genannten Umwandlungselement des wenigstens einen Getriebes, eingreift, wobei eine Rotation des Verstellelement zu einer Positionsveränderung des Umwandlungselements und/oder des Endanschlagselements führt. Die Positionsveränderung insbesondere des Endanschlagelements kann dabei zum Beispiel auf eine Kreisbahn festgelegt sein. Somit kann eine besonders gute Einstellung der Position des Endanschlagselements vorgenommen werden.

Um eine besonders gute Kraftableitung bei einer Beaufschlagung des Endanschlagselements erreichen zu können, kann gemäß einer weiteren vorteilhaften Ausgestaltung vorgesehen sein, dass ein Gehäuseteil, zum Beispiel das bereits zuvor genannte mit dem wenigstens einen Verstellelement verbundene Gehäuseteil, wenigstens teilweise einen bogenförmigen Querschnitt, vorzugsweise einen kreisbogenförmigen Querschnitt, aufweist. Somit kann ein Lastverlauf am Gehäuseteil nach innen gerichtet sein. Im Gegensatz dazu ist bei bisher bekannten Stellantrieben der Lastverlauf am Gehäuseteil üblicherweise nach außen gerichtet. Dadurch kommt es bei vorbekannten Stellantrieben jedoch viel einfacher zu Beschädigungen des Gehäuseteils an der Kontaktstelle, da die Kraftableitung hier deutlich schlechter ist und die bei einer Beaufschlagung des Endanschlagselements resultierenden Kräfte somit vorwiegend lokal auf die Wandung des Gehäuseteils wirken.

Gemäß einer weiteren vorteilhaften Ausgestaltung kann/können ein Umwandlungselement, beispielsweise das zuvor bereits genannte Umwandlungselement des wenigstens einen Getriebes, und/oder das Endanschlagselement in einer Führungsvorrichtung verstellbar geführt sein. Vorzugsweise kann die Führungsvorrichtung einen ungeraden Verlauf, insbesondere einen kreisbogenförmigen Verlauf, aufweisen.

Gemäß einer weiteren vorteilhaften Ausgestaltung kann zwischen dem wenigstens einen Endanschlagselement und dem wenigstens einen Verstellelement wenigstens ein Winkelgetriebe angeordnet sein. Insbesondere kann über das wenigstens eine Winkelgetriebe ein erstes Verstellelement mit einem zweiten, zum ersten Verstellelement um einen Winkel versetzt angeordnetes Verstellelement in einer Wirkverbindung stehen. Somit ist eine einfachere Einstellung der Position des Endanschlagselements möglich, indem ein Nutzer eine Betätigung eines der Verstellelemente nicht von der Seite, sondern insbesondere von einer Oberseite des Stellantriebes vornehmen kann. Die Zugänglichkeit zum Verstellelement ist daher deutlich verbessert gegenüber vorbekannten Stellantrieben, bei welchen eine Betätigung des Verstellelements nur an einer Seitenwand des Gehäuseteils, also nicht von oben, möglich ist. Gerade bei engen Platzverhältnissen ist es daher schwierig eine optimale Einstellung des Endanschlagselements vornehmen zu können. Beispielsweise kann das Winkelgetriebe als ein Kegelradgetriebe und/oder ein Kronenradgetriebe und/oder ein Schneckengetriebe ausgebildet sein.

Gemäß einer weiteren vorteilhaften Ausgestaltung kann es vorgesehen sein, dass das Verstellelement, insbesondere das erste Verstellelement und/oder das zweite Verstellelement, entlang einer Längsachse, insbesondere parallel zu einer Längsachse, eines oder des Gehäuseteils verläuft/verlaufen. Somit kann der Platzbedarf für das wenigstens eine Verstellelement auf ein Minimum reduziert werden. Alternativ oder ergänzend dazu kann das wenigstens eine Verstellelement um die Längsachse verstellbar sein.

Gemäß einer weiteren vorteilhaften Ausgestaltung kann das zweite Verstellelement einen Verstellkopf aufweisen, der an einer Oberseite des Stellantriebs angeordnet ist. Wie bereits zuvor erläutert, ist es dabei besonders von Vorteil, dass eine Einstellung der Position des Endanschlagselements einfacher durchführbar ist, da die Zugänglichkeit für einen Nutzer an der Oberseite in der Regel besser ist als an einer Seite des Stellantriebes. Insbesondere kann der Verstellkopf eine Werkzeugangriffsstelle aufweisen, so dass eine Einstellung der Position des wenigstens einen Endanschlagselements durch eine Betätigung des an der Oberseite angeordneten Verstellkopfes erfolgen kann. Durch die Werkzeugangriffsstelle ist eine bessere Kraftübertragung durch einen Nutzer mittels des passenden Werkzeuges möglich.

Ein Verstellkopf kann beispielsweise breiter als ein mit diesem verbundener Teil, wie z.B. ein Gewinde sein.

Gemäß einer weiteren vorteilhaften Ausgestaltung kann eine Anschlagsfläche des wenigstens einen Endanschlagselement so ausgerichtet oder ausrichtbar sein, dass eine senkrechte Beaufschlagung durch den einen Teil des Antriebsstrangs erfolgt. Dadurch erfolgt ein möglichst geringer Verschleiß und die Kraftableitung über das Verstellelement und das Gehäuseteil ist optimiert, da das Gehäuseteil nach innen auf Zug belastet ist, wenn das Endanschlagselement durch den Teil eines Antriebsstrangs beaufschlagt wird. Somit ist ein besonders wartungsarmer und langzeitiger Betrieb des Stellantriebes möglich.

Gemäß einer weiteren vorteilhaften Ausgestaltung kann das erste Verstellelement an einer Seitenwand des Gehäuseteils aus dem Inneren des Gehäuseteils herausgeführt sein. Alternativ oder ergänzend dazu kann das zweite Verstellelement an einer Stirnseite des Stellantriebs herausgeführt sein. Somit kann der Platzbedarf für die Anschlagsvorrichtung zur Einstellung einer Position des Endanschlagselements besonders gering gehalten werden, wobei jedoch gleichzeitig eine bequeme und präzise Einstellung möglich ist.

Die Erfindung wird nun anhand mehrerer Ausführungsbeispiele näher beschrieben, ist jedoch nicht auf diese Ausführungsbeispiele beschränkt. Weitere Ausführungsbeispiele ergeben sich durch die Kombination der Merkmale einzelner oder mehrerer Ansprüche untereinander und/oder mit einzelnen oder mehreren Merkmalen der Ausführungsbeispiele.

Es zeigt:
- Fig. 1: eine perspektivische Darstellung einer möglichen Ausführungsvariante eines erfindungsgemäßen Stellantriebes mit zwei Anschlagsvorrichtungen,
- Fig. 2: eine perspektivische Darstellung einer weiteren möglichen Ausführungsvariante eines erfindungsgemäßen Stellantriebes mit zwei Anschlagsvorrichtungen.

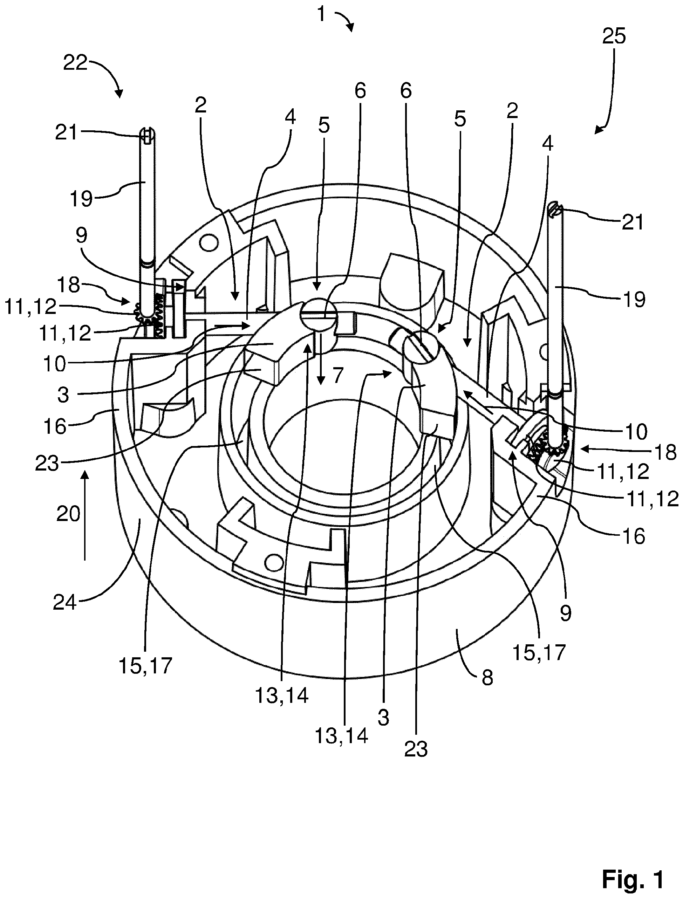

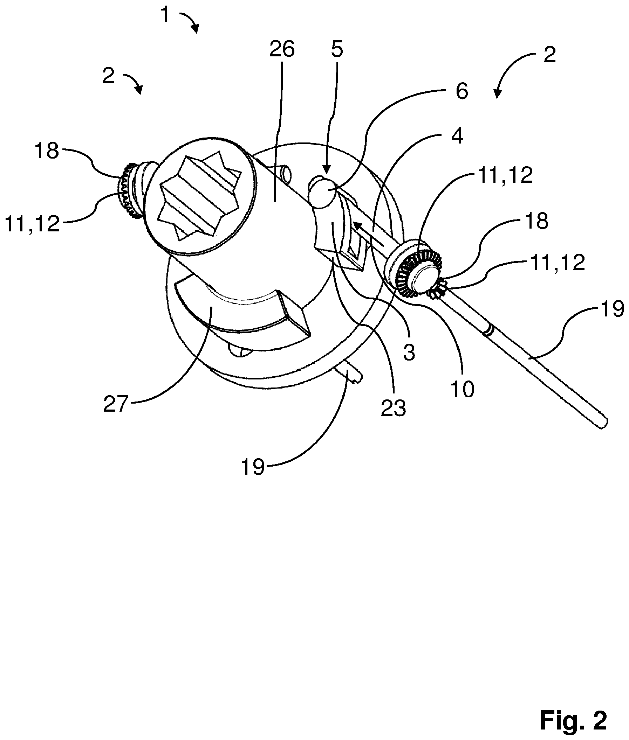

Die Figuren 1 und 2 zeigen jeweils einen im Ganzen als 1 bezeichneten Stellantrieb, der beispielsweise zur Verstellung eines Ventilkörpers eines Ventils verwendbar ist.

Die in den Figuren 1 und 2 gezeigte Ausführungsvariante des Stellantriebs 1 weist zwei Anschlagsvorrichtungen 2 auf, die jeweils dazu dienen, eine Position eines Endanschlags für einen Teil eines Antriebsstrangs des Stellantriebes 1 einstellen zu können. Bei dem Teil kann es sich zum Beispiel um ein exzentrisches Element 27 handeln, das mit einer Antriebswelle 26 verbunden ist (siehe Fig. 2).

Die Endanschläge werden dabei jeweils durch ein Endanschlagselement 3 eingestellt, indem die Positionen beider Endanschlagselemente 3 veränderbar sind.

Jedes Endanschlagselement 3 steht mit jeweils einem ersten Verstellelement 4 in einer Wirkverbindung, so dass es bei einer Betätigung des jeweiligen Verstellelements 4 und/oder bei einer Bewegung des Verstellelements 4 zu einer Positionsänderung des zugeordneten Endanschlagselements 3 kommt.

Zwischen jedem Endanschlagselement 3 und dem diesen zugeordneten ersten Verstellelement 4 ist ein erstes Getriebe 5 angeordnet, womit die Positionseinstellung des Endanschlagselements 3 vereinfacht ist. Somit weist jede Anschlagsvorrichtung 2 jeweils ein erstes Getriebe 5 auf.

Jedes Endanschlagselement 3 ist mit je einem Umwandlungselement 6 jeweils eines ersten Getriebes 5 gekoppelt, wobei die Endanschlagselemente 3 dabei jeweils relativ zu dem diesen zugeordneten Umwandlungselement 6 beweglich, insbesondere um eine Schwenkachse 7 schwenkbar, ausgebildet sind.

Das erste Verstellelement 4 ist mit einem Gehäuseteil 8 des Stellantriebs 1 verbunden. Bei dem Gehäuseteil 8 kann es sich zum Beispiel um ein Innengehäuseteil handeln.

Bei einer Druck-Beaufschlagung des Endanschlagselements 3 durch den zuvor bereits genannten Teil 27 des Antriebsstrangs wird eine Kontaktstelle 9 des Gehäuseteils 8 mit dem ersten Verstellelement 4 auf Zug belastet. Dadurch kann es zu einer besseren Kraftableitung über den Gehäuseteil 8 kommen, als wenn eine Druckbelastung des Gehäuseteils 8 an der Kontaktstelle 9 erfolgt.

Die Kontaktstelle 9 am Gehäuseteil 8 ist gewindefrei ausgebildet. Bei einer Beaufschlagung des Endanschlagselements 3 durch einen Teil 27 des Antriebsstrangs besteht somit eine Belastung der Kontaktstelle 9 größtenteils durch eine Zugkraft 10, also insbesondere größtenteils nicht durch eine Druckkraft.

Das erste Verstellelement 4 weist einen Verstellkopf 11 auf, der zum Beispiel in einem Radiallager am Gehäuseteil 8 drehbar gelagert ist. Der Verstellkopf 11 ist hier als ein Getrieberad 12 ausgebildet. Das Radiallager kann vorzugsweise durch die Kontaktstelle 9 ausgebildet sein. Dadurch bleibt ein Abstand zwischen einer Wandung, insbesondere einer Seitenwand 24, des Gehäuseteils 8 auch nach einer Betätigung, insbesondere nach einer Rotation des ersten Verstellelements 4 gleich oder nahezu gleich. Entscheidend hierbei ist, dass es nicht zu einem Herausdrehen oder Hineindrehen des wenigstens einen Verstellelements 4 aus dem oder in das Gehäuseteil 8 kommt, wenn es bestätigt wird. Somit kann verhindert werden, dass das erste Verstellelements 4 in einer Stellung weit aus vom Gehäuseteil 8 absteht.

Jedes erste Verstellelement 4 weist ein Gewinde 13 auf, dass in ein korrespondierendes Gegengewinde 14 am dazugehörigen Umwandlungselement 6 eingeschraubt ist. Bei einer Rotation des ersten Verstellelements 4 kommt es zu einer Verstellung des Umwandlungselements 6, indem das Verstellelement 4 in das Gegengewinde 14 hinein- oder herausgeschraubt wird, wodurch es zu einer Relativverstellung des Umwandlungselements 6 zum Verstellelement 4 kommt.

Aufgrund der Kopplung des Umwandlungselements 6 mit einem Endanschlagselement 3 wird das Endanschlagselement 3 bei einer Verstellung des Umwandlungselements 6 mitgenommen und daher in seiner Position verstellt. Vorzugsweise wird das Endanschlagselement 3 auf einer Kreisbahn 15 verstellt.

Anders ausgedrückt kann gesagt werden, dass das erste Getriebe 5 einer Anschlagsvorrichtung 2 durch ein Umwandlungselement 6 mit einem Gegengewinde 14 und einem korrespondierenden Gewinde 13 (vorzugsweise des ersten Verstellelements 4), das mit dem Gegengewinde 14 zusammenwirkt, ausgebildet ist.

Das erste Verstellelement 4 ist an der Kontaktstelle 9 mit einem im Querschnitt 16 bogenförmig ausgebildeten Gehäuseteil 8 gekoppelt. Durch den bogenförmigen Verlauf des Gehäuseteils 8 ist eine besonders gute Kraftableitung möglich, wenn das Gehäuseteil 8 auf Zug belastet ist, also wenn der Lastverlauf am Gehäuseteil 8 nach innen gerichtet ist.

Der Stellantrieb 1 weist eine Führungsvorrichtung 17 auf, in welcher zumindest das Umwandlungselement 6 und/oder das Endanschlagselement 3 reversibel verstellbar geführt ist. Die Führungsvorrichtung 17 weist bei der in Fig. 1 gezeigten Ausführungsvariante eine Führungsschiene mit zumindest teilweise ungeradem Verlauf auf.

Jede Anschlagsvorrichtung 2 des Stellantriebes 1 weist zudem ein zweites Getriebe 18 auf, das bei der in den Figuren 1 und 2 gezeigten Ausführungsvarianten jeweils als Winkelgetriebe ausgestaltet ist.

Das zweite Getriebe 18 ist zwischen dem wenigstens einen Endanschlagselement 3 und einem zweiten Verstellelement 19 angeordnet.

Das zweite Getriebe 18 verbindet das erste Verstellelement 4 mit dem zweiten Verstellelement 19, wobei das erste Verstellelement 4 zum zweiten Verstellelement 19 um einen Winkel versetzt angeordnet ist. Die beiden Verstellelemente 4, 19 stehen zudem über das zweite Getriebe 18, insbesondere über die beiden Getrieberäder 12, in einer Wirkverbindung. Bei einer Betätigung des zweiten Verstellelements 19 kommt es so auch zu einer Verstellung des ersten Verstellelements 4 und schließlich somit auch zu einer Positionsänderung des Endanschlagselements 3.

Die zuvor beschriebene Ausgestaltung des Stellantriebes 1 hat den Vorteil, dass die beiden Verstellelemente 4, 19 abgewinkelt zueinander anordenbar sind, so dass der Ort der Anordnung eines Betätigungselements und/oder einer Werkzeugangriffsstelle 21 zur Positionseinstellung des Endanschlags frei wählbar ist. Damit kann verhindert werden, dass ein Zugang zum Betätigungselement und/oder zur Werkzeugangriffsstelle 21 erschwert ist, weil diese/s an einer schwer zugänglichen Stelle des Stellantriebes 1 liegt.

Das zweite Verstellelement 19 ist bei der in den Fig. 1 und 2 gezeigten Ausgestaltung entlang einer Längsachse 20, insbesondere parallel zur einer Längsachse 20, des Gehäuseteils 8 ausgerichtet. Diese Anordnung ist besonders platzsparend.

Das zweite Verstellelement 19 weist an seinen beiden Enden jeweils einen Verstellkopf 11 auf, wobei die beiden Verstellköpfe 11 als Getrieberäder 12 und/oder Werkzeugangriffsstelle 21 ausgebildet sein können.

Die Anschlagsflächen 23 der beiden Endanschlagselemente 3 sind so ausgerichtet oder ausrichtbar, dass eine senkrechte Beaufschlagung der Anschlagsflächen 23 durch den einen Teil 27 des Antriebsstrangs erfolgt. Dadurch ist eine optimale Kraftableitung gegeben.

Das erste Verstellelement 4 ist an einer Seitenwand 24 des Gehäuseteils 8 aus dem Inneren des Gehäuseteils 8 herausgeführt. Das zweite Verstellelement 19 ist an einer Stirnseite 25 des Stellantriebs 1 herausgeführt.

Die Erfindung betrifft also insbesondere einen Stellantrieb 1 mit zwei Anschlagsvorrichtungen 2, die jeweils wenigstens ein Endanschlagselement 3 für einen Teil 27 eines Antriebsstrangs und wenigstens ein mit dem Endanschlagselement 3 in einer Wirkverbindung stehendes Verstellelement 4, 19, das zur Einstellung einer Position des Endanschlagselements 3 eingerichtet ist, umfassen, wobei zwischen dem wenigstens einen Endanschlagselement 3 und dem wenigstens einen Verstellelement 4, 19 wenigstens ein Getriebe 5, 18 angeordnet ist.

### Bezugszeichenliste

1 Stellantrieb
2 Anschlagsvorrichtung
3 Endanschlagselement
4 Erstes Verstellelement
5 Erstes Getriebe
6 Umwandlungselement
7 Schwenkachse
8 Gehäuseteil; Innengehäuseteil
9 Kontaktstelle
10 Zugkraft
11 Verstellkopf
12 Getrieberad
13 Gewinde
14 Gegengewinde
15 Kreisbahn
16Bogenförmiger Querschnitt
17 Führungsvorrichtung
18 Zweites Getriebe (z.B. Winkelgetriebe)
19 Zweites Verstellelement
20 Längsachse des Gehäuseteils
21 Werkzeugangriffsstelle
22 Oberseite
23 Anschlagsfläche
24 Seitenwand des Gehäuseteils
25 Stirnseite des Gehäuseteils
26 Antriebswelle
27 Exzentrisches Element

## Patentansprüche

1. **Stellantrieb (1)** mit wenigstens einer Anschlagsvorrichtung (2) umfassend wenigstens ein Endanschlagselement (3) für einen Teil (27) eines Antriebsstrangs und wenigstens ein mit dem Endanschlagselement (3) in einer Wirkverbindung stehendes Verstellelement (4, 19), das zur Einstellung einer Position des Endanschlagselements (3) eingerichtet ist,
- wobei zwischen dem wenigstens einen Endanschlagselement (3) und dem wenigstens einen Verstellelement (4, 19) wenigstens ein Getriebe (5, 18) angeordnet ist,
**dadurch gekennzeichnet,**
- **dass** der Stellantrieb (1) ein erstes Verstellelement (4) und ein zweites Verstellelement (19) aufweist,
- wobei zwischen dem ersten Verstellelement (4) und dem Endanschlagselement (3) ein erstes Getriebe (5) und zwischen dem ersten Verstellelement (4) und dem zweiten Verstellelement (19) ein zweites Getriebe (18) angeordnet ist.

2. Stellantrieb (1) nach Anspruch 1, wobei das Endanschlagselement (3) mit einem Umwandlungselement (6) des wenigstens einen Getriebes (5, 18) in einer Wirkverbindung steht.

3. Stellantrieb (1) nach Anspruch 1 oder 2, wobei das Endanschlagselement (3) relativ zu einem oder dem Umwandlungselement (6) des wenigstens einen Getriebes (5, 18) beweglich, insbesondere um eine Schwenkachse (7) drehbar, angeordnet ist.

4. Stellantrieb (1) nach einem der Ansprüche 1 bis 3, wobei das wenigstens eine Verstellelement (4, 19) mit einem Gehäuseteil (8) des Stellantriebs (1) verbunden ist und wobei bei einer Druck-Beaufschlagung des Endanschlagselements (3) durch einen Teil des Antriebsstrangs eine Kontaktstelle (9) des Gehäuseteils (8) mit dem wenigstens einen Verstellelement (4, 19) auf Zug belastet ist,
- insbesondere wobei die Kontaktstelle (9) am Gehäuseteil (8) gewindefrei ausgebildet ist,
- vorzugsweise sodass bei einer Beaufschlagung des Endanschlagselements (3) durch einen Teil des Antriebsstrangs eine Belastung der Kontaktstelle (9) größtenteils durch eine Zugkraft (10) oder größtenteils nicht durch eine Druckkraft besteht.

5. Stellantrieb (1) nach einem der vorstehenden Ansprüche, wobei das Verstellelement (4, 19) einen Verstellkopf (11) aufweist, der drehbar an dem Gehäuseteil (8),
- insbesondere an einer gewindefreien Kontaktstelle (9),
gelagert ist.

6. Stellantrieb (1) nach einem der vorstehenden Ansprüche, wobei ein Abstand zwischen dem Verstellelement (4, 19) und dem Gehäuseteil (8),
insbesondere ein Abstand zwischen dem Verstellkopf (11) und dem Gehäuseteil (8),
bei einer Betätigung des Verstellelements (4, 19) konstant bleibt.

7. Stellantrieb (1) nach einem der vorstehenden Ansprüche, wobei das wenigstens eine Verstellelement (4, 19) ein Gewinde (13) aufweist, das in ein entsprechendes Gegengewinde (14) an einem oder dem Umwandlungselement (6) des wenigstens einen Getriebes (5, 18) eingreift, und wobei eine Rotation des Verstellelements (4, 19) zu einer Positionsveränderung des Umwandlungselements (6) oder des Endanschlagselements (3) führt.

8. Stellantrieb (1) nach einem der vorstehenden Ansprüche, wobei ein Gehäuseteil (8), insbesondere das in Anspruch 4 eingeführte mit dem wenigstens einen Verstellelement (4, 19) verbundene Gehäuseteil (8), wenigstens teilweise einen bogenförmigen Querschnitt (16) aufweist,
- insbesondere wobei ein Lastverlauf am Gehäuseteil (8) nach innen gerichtet ist.

9. Stellantrieb (1) nach einem der Ansprüche 2 bis 8, wobei das Umwandlungselement (6) des wenigstens einen Getriebes (5, 18) und/oder das Endanschlagselement (3) in einer Führungsvorrichtung (17) verstellbar geführt ist/sind,
- vorzugsweise wobei die Führungsvorrichtung (17) einen ungeraden Verlauf aufweist.

10. Stellantrieb (1) nach einem der vorstehenden Ansprüche, wobei zwischen dem wenigstens einen Endanschlagselement (3) und dem wenigstens einen Verstellelement (4, 19) wenigstens ein Winkelgetriebe (18) angeordnet ist,
- insbesondere wobei über das wenigstens eine Winkelgetriebe (18) ein erstes Verstellelement (4) mit einem zweiten, zum ersten Verstellelement (4) um einen Winkel versetzt angeordneten Verstellelement (19) in einer Wirkverbindung steht.

11. Stellantrieb (1) nach einem der vorstehenden Ansprüche, wobei das erste Verstellelement (4) und/oder das zweite Verstellelement (19) entlang einer Längsachse (20) eines Gehäuseteils (8) verläuft und/oder um diese verstellbar ist.

12. Stellantrieb (1) nach einem der vorstehenden Ansprüche, wobei das zweite Verstellelement (19) einen Verstellkopf (11) aufweist, der an einer Oberseite (22) des Stellantriebs (1) angeordnet ist, sodass eine Einstellung der Position des wenigstens einen Endanschlagselements (3) durch eine Betätigung des an der Oberseite (22) angeordneten Verstellkopfes (11) erfolgen kann.

13. Stellantrieb (1) nach einem der vorstehenden Ansprüche, wobei eine Anschlagsfläche (23) des wenigstens einen Endanschlagselement (3) so ausgerichtet oder ausrichtbar ist, dass eine senkrechte Beaufschlagung durch den einen Teil des Antriebsstrangs erfolgt.

14. Stellantrieb (1) nach einem der vorstehenden Ansprüche, wobei ein oder das erste Verstellelement (4) an einer Seitenwand (24) des Gehäuseteils (8) aus dem Inneren des Gehäuseteils (8) herausgeführt ist.

15. Stellantrieb (1) nach einem der vorstehenden Ansprüche, wobei ein oder das zweite Verstellelement (19) an einer Stirnseite (25) des Stellantriebs (1) herausgeführt ist.

## Claims

1. **Actuating drive (1)** having at least one stop device (2), said at least one stop device comprising at least one end-stop element (3) for a part (27) of a drive train and comprising at least one adjustment element (4, 19) which is connected operatively to the end-stop element (3) and is configured for setting a position of the end-stop element (3),
- wherein at least one gear mechanism (5, 18) is arranged between the at least one end-stop element (3) and the at least one adjustment element (4, 19),
**characterized**
- **in that** the actuating drive (1) has a first adjustment element (4) and a second adjustment element (19),
- wherein a first gear mechanism (5) is arranged between the first adjustment element (4) and the end-stop element (3) and a second gear mechanism (18) is arranged between the first adjustment element (4) and the second adjustment element (19).

2. Actuating drive (1) according to Claim 1, wherein the end-stop element (3) is connected operatively to a conversion element (6) of the at least one gear mechanism (5, 18).

3. Actuating drive (1) according to Claim 1 or 2, wherein the end-stop element (3) is arranged so as to be movable, in particular pivotable about a pivot axis (7), relative to a or the conversion element (6) of the at least one gear mechanism (5, 18).

4. Actuating drive (1) according to one of Claims 1 to 3, wherein the at least one adjustment element (4, 19) is connected to a housing part (8) of the actuating drive (1), and wherein, when the end-stop element (3) is subjected to pressure by a part of the drive train, a point of contact (9) of the housing part (8) with the at least one adjustment element (4, 19) is subjected to tensile loading,
- in particular wherein the point of contact (9) at the housing part (8) is formed without a thread,
- preferably so that, when the end-stop element (3) is subjected to pressure by a part of the drive train, there is loading at the point of contact (9) largely due to a tensile force (10) or largely not due to a compressive force.

5. Actuating drive (1) according to one of the preceding claims, wherein the adjustment element (4, 19) has an adjustment head (11) which is mounted rotatably on the housing part (8),
- in particular on a point of contact (9) without a thread.

6. Actuating drive (1) according to one of the preceding claims, wherein a distance between the adjustment element (4, 19) and the housing part (8), in particular a distance between the adjustment head (11) and the housing part (8), remains constant when the adjustment element (4, 19) is actuated.

7. Actuating drive (1) according to one of the preceding claims, wherein the at least one adjustment element (4, 19) has a thread (13) which engages into a corresponding counterpart thread (14) on a or the conversion element (6) of the at least one gear mechanism (5, 18), and wherein a rotation of the adjustment element (4, 19) leads to a change in position of the conversion element (6) or of the end-stop element (3).

8. Actuating drive (1) according to one of the preceding claims, wherein a housing part (8), in particular the housing part (8) connected to the at least one adjustment element (4, 19) as introduced in Claim 4, has at least partially an arcuate cross section (16),
- in particular wherein a load profile at the housing part (8) is directed inwards.

9. Actuating drive (1) according to one of Claims 2 to 8, wherein the conversion element (6) of the at least one gear mechanism (5, 18) and/or the end-stop element (3) are/is guided adjustably in a guide device (17),
- preferably wherein the guide device (17) has a non-rectilinear profile.

10. Actuating drive (1) according to one of the preceding claims, wherein at least one angular gear mechanism (18) is arranged between the at least one end-stop element (3) and the at least one adjustment element (4, 19),
- in particular wherein, via the at least one angular gear mechanism (18), a first adjustment element (4) is connected operatively to a second adjustment element (19), which is arranged offset angularly from the first adjustment element (4).

11. Actuating drive (1) according to one of the preceding claims, wherein the first adjustment element (4) and/or the second adjustment element (19) extend(s) along a longitudinal axis (20) of a housing part (8) and/or can be adjusted about said longitudinal axis.

12. Actuating drive (1) according to one of the preceding claims, wherein the second adjustment element (19) has an adjustment head (11) which is arranged on a top side (22) of the actuating drive (1), so that the position of the at least one end-stop element (3) can be set by way of actuation of the adjustment head (11) arranged on the top side (22) .

13. Actuating drive (1) according to one of the preceding claims, wherein a stop surface (23) of the at least one end-stop element (3) is or can be oriented such that the one part of the drive train acts on it perpendicularly.

14. Actuating drive (1) according to one of the preceding claims, wherein a or the first adjustment element (4) is led out of the interior of the housing part (8) at a side wall (24) of the housing part (8) .

15. Actuating drive (1) according to one of the preceding claims, wherein a or the second adjustment element (19) is led out at a face side (25) of the actuating drive (1).

## Revendications

1. Servomoteur (1) avec au moins un dispositif de butée (2) comprenant au moins un élément de butée terminale (3) pour une pièce (27) d'une chaîne cinématique et au moins un élément de réglage (4, 19) en liaison active avec l'élément de butée terminale (3) qui est agencé pour régler l'élément de butée terminale (3),
- au moins une transmission (5, 18) étant disposée entre l'au moins un élément de butée terminale (3) et l'au moins un élément de réglage (4, 19),
**caractérisé en ce que**
- ce servomoteur (1) présente un premier élément de réglage (4) et un deuxième élément de réglage (19),
- une première transmission (5) étant disposée entre le premier élément de réglage (4) et l'élément de butée terminale (3) et une deuxième transmission (18) entre le premier élément de réglage (4) et le deuxième élément de réglage (19).

2. Servomoteur (1) selon la revendication 1, dans lequel l'élément de butée terminale (3) est en liaison active avec un élément de conversion (6) de l'au moins une transmission (5, 18).

3. Servomoteur (1) selon la revendication 1 ou 2, dans lequel l'élément de butée terminale (3) est disposé de façon mobile, en particulier de façon pivotante autour d'un axe de rotation (7), par rapport à un ou à l'élément de conversion (6) de l'au moins une transmission (5, 18).

4. Servomoteur (1) selon une des revendications 1 à 3, dans lequel l'au moins un élément de réglage (4, 19) est relié avec une pièce de boîtier (8) du servomoteur (1) et dans lequel, en cas de sollicitation par pression de l'élément de butée terminale (3) par une partie de la chaîne cinétique, un point de contact (9) de la pièce de boîtier (8) avec au moins un élément de réglage (4, 19) est sollicité en traction,
- le point de contact (9) étant en particulier formé sans filetage sur la pièce de boîtier (8),
- de préférence de sorte qu'en cas de sollicitation de l'élément de butée terminale (3) par une partie de la chaîne cinétique, une charge du point de contact (9) soit constituée en majeure partie par une force de traction (10) ou en majeure partie pas par une force de pression.

5. Servomoteur (1) selon une des revendications précédentes, dans lequel l'élément de réglage (4, 19) comporte une tête de réglage (11) qui est montée de façon pivotante sur la pièce de boîtier (8),
- en particulier sur un point de contact sans filetage (9).

6. Servomoteur (1) selon une des revendications précédentes, dans lequel une distance entre l'élément de réglage (4, 19) et la pièce de boîtier (8), en particulier une distance entre la tête de réglage (11) et la pièce de boîtier (8), reste constante en cas d'activation de l'élément de réglage (4, 19).

7. Servomoteur (1) selon une des revendications précédentes, dans lequel l'au moins un élément de réglage (4, 19) comporte un filetage (13) qui entre en prise avec un contre-filetage (14) sur un ou l'élément de conversion (6) de l'au moins une transmission (5, 18), et dans lequel une rotation de l'élément de réglage (4, 19) produit un changement de position de l'élément de conversion (6) ou de l'élément de butée terminale (3).

8. Servomoteur (1) selon une des revendications précédentes, dans lequel un élément de boîtier (8), en particulier l'élément de boîtier (8) relié avec l'au moins un élément de réglage (4, 19) présenté dans la revendication 4, présente au moins partiellement une section courbe (16),
- en particulier dans lequel une courbe de charge sur la pièce de boîtier (8) est orientée vers l'intérieur.

9. Servomoteur (1) selon une des revendications 2 à 8, dans lequel l'élément de conversion (6) de l'au moins une transmission (5, 18) et/ou l'élément de butée terminale (3) est/sont guidé(s) de façon réglable dans un dispositif de guidage (17),
- le dispositif de guidage (17) présentant de préférence un tracé non rectiligne.

10. Servomoteur (1) selon une des revendications précédentes, dans lequel au moins un engrenage angulaire (18) est disposé entre l'au moins un élément de butée terminale (3) et l'au moins un élément de réglage (4, 19),
- en particulier dans lequel un premier élément de réglage (4) est en liaison active via l'au moins un engrenage angulaire (18) avec un deuxième élément de réglage (19) décalé d'un certain angle par rapport au premier élément de réglage (4).

11. Servomoteur (1) selon une des revendications précédentes, dans lequel le premier élément de réglage (4) et/ou le deuxième élément de réglage (19) courent le long d'un axe longitudinal (20) d'une pièce de boîtier (8) et/ou sont réglables autour de celui-ci.

12. Servomoteur (1) selon une des revendications précédentes, dans lequel le deuxième élément de réglage (19) comporte une tête de réglage (11) qui est disposée sur une face supérieure (22) du servomoteur (1), de sorte qu'un réglage de la position de l'au moins un élément de butée terminale (3) peut être produit par une activation de la tête de réglage (22) disposée sur la face supérieure (22).

13. Servomoteur (1) selon une des revendications précédentes, dans lequel une surface de butée (23) de l'au moins un élément de butée terminale (3) est orientée ou peut être orientée de sorte qu'une sollicitation perpendiculaire par la partie de la chaîne cinétique se produit.

14. Servomoteur (1) selon une des revendications précédentes, dans lequel un ou le premier élément de réglage (4) est extrait de l'intérieur de la pièce de boîtier (8) au niveau d'une face latérale (24) de la pièce de boîtier (8).

15. Servomoteur (1) selon une des revendications précédentes, dans lequel un ou le deuxième élément de réglage (19) est extrait au niveau d'une face frontale (25) du servomoteur (1).
